# FASCICULE DE BREVET EUROPEEN

(11) **EP 0 673 806 B1**
(45) Date de publication et mention de la délivrance du brevet: **15.10.1997**
(21) Numéro de dépôt: 95400647.4
(22) Date de dépôt: 23.03.1995
(51) Int. Cl.: B60R 19/24

(54) **Dispositif de montage d'un pare-chocs sur la carrosserie d'un vehicule automobile.**
Vorrichtung zum Befestigen von Stossstangen an der Karosserie eines Kraftfahrzeuges
Device for mounting a bumper on a car body

(30) Priorité: 25.03.1994 FR 9403530
(43) Date de publication de la demande: 27.09.1995
(73) Titulaire: PEGUFORM FRANCE, 01100 Oyonnax (FR)
(72) Inventeur: Guichon, Alain, F-01100 Apremont (FR); Dobkess, Jacques, F-01100 Oyonnax (FR)
(74) Mandataire: Schrimpf, Robert

(56) Documents cités:
- WO-A-92/11149
- DE-B- 2 728 026
- DE-U- 8 304 006
- US-A- 4 875 728
- PATENT ABSTRACTS OF JAPAN vol. 11, no. 250 (M-616) 14 Août 1987 & JP-A-62 059 147 (NISSAN MOTOR CO MOTOR) 14 Mars 1987

## Description

La présente invention concerne de manière générale le montage de pare-chocs sur des carrosseries de véhicules automobiles et plus particulièrement un dispositif de montage comprenant des moyens pour guider et fixer les retours d'un pare-chocs sur des parties latérales de la carrosserie d'un véhicule automobile.

Selon une technique de montage déjà connue, les deux retours d'un pare-chocs sont boulonnés respectivement sur deux côtés latéraux d'une carrosserie d'un véhicule.

A cet effet, on connaît un dispositif de montage qui comprend pour chaque retour de pare-chocs, un boulon destiné à être engagé par l'intérieur de la carrosserie dans un perçage prévu dans une partie latérale de ladite carrosserie et vissé dans un écrou porté par un support solidaire de la face interne du retour correspondant. Ce support est réalisé en matière plastique et est assemblé par ultra-sons, miroirs chauffants ou boutrolé sur ledit retour. En outre, ce support d'écrou présente une certaine flexibilité de manière à compenser les jeux de montage, c'est-à-dire permettre l'alignement de l'écrou avec le perçage de la carrosserie dans lequel le boulon est engagé.

On connaît également un autre dispositif de montage du même type que le premier précité, dans lequel chaque écrou est porté par un support clipsé dans des montants formés de moulage avec le pare-chocs. Le clipsage des supports d'écrou est réalisé avec un certain jeu de débattement de manière à compenser les jeux de montage.

Le montage d'un pare-chocs sur une carrosserie avec l'un ou l'autre des dispositifs de montage précités, nécessite qu'un monteur maintienne le pare-chocs en position de montage sur le véhicule pendant qu'un autre ouvrier engage par l'intérieur de la carrosserie un boulon dans chaque perçage correspondant de chaque partie latérale de la carrosserie et visse chaque boulon dans chaque écrou de chaque retour du pare-chocs. Le positionnement du pare-chocs par le monteur n'étant pas très précis, les supports flexibles ou montés par clipsage avec un certain jeu, permettent, comme cela a déjà été explicité, de corriger les jeux de montage pour l'alignement des écrous avec les perçages de la carrosserie.

Ces deux dispositifs présentent cependant un certain nombre d'inconvénients.

En ce qui concerne le premier dispositif de montage, l'assemblage par ultra-sons, par miroirs chauffants ou le boutrolage des supports d'écrou sur les retours de pare-chocs représente un coût élevé de fabrication.

En outre, dans chacun des deux dispositifs de montage précités, la flexibilité des supports d'écrou ou bien le jeu de montage de ces supports facilant le montage du pare-chocs sur le véhicule, peuvent après montage, entraîner un décalage du pare-chocs par rapport à sa position prévue sur le véhicule, ce qui rend l'aspect extérieur du véhicule inesthétique.

Enfin, le montage d'un pare-chocs avec de tels dispositifs est difficilement automatisable et nécessite la contribution de deux ouvriers, ce qui entraîne des coûts de fabrication élevés.

Afin de pallier les inconvénients de la technique antérieure précitée, l'invention propose un nouveau dispositif de montage d'un pare-chocs sur la carrosserie d'un véhicule automobile, qui permet le montage dudit pare-chocs par un seul ouvrier ou bien par un robot automatisé, et qui comprend des éléments de montage compensant les jeux de montage tout en interdisant, lorsque le pare-chocs est monté sur le véhicule, un décalage de celui-ci par rapport à sa position prévue sur ledit véhicule.

Par ailleurs, on connaît du document DE-U-83 04 006, un dispositif de montage d'un pare-chocs sur une carrosserie de véhicule automobile, qui comporte une embase montée sur la face extérieure d'une partie latérale de la carrosserie, et qui est pourvue d'un passage pour la mise en place d'un organe de fixation apte à être engagé par l'intérieur de la carrosserie dans une ouverture correspondante prévue sur ladite paroi latérale, et une pièce de liaison fixée sur une face intérieure du pare-chocs apte à être coulissée sur l'embase. Selon ce document, la fixation de la pièce de liaison sur l'embase est simplement assurée par les extrémités supérieure et inférieure latérales de la pièce de liaison qui coulissent dans des glissières de l'embase.

Pour assurer la tenue mécanique de la pièce de liaison une fois montée dans les glissières de l'embase, ladite pièce de liaison comporte des nervures de raidissement. En outre, les extrémités supérieure et inférieure de ladite pièce de liaison comporte chacune une partie médiane plus épaisse que les parties d'extrémités de façon à assurer un blocage dans chaque glissière de la dite embase.

Cette pièce de liaison présente alors une structure complexe, qui est difficile à réaliser et qui entrâine un surcoût de fabrication du fait d'une utilisation de plus de matière et d'un moulage avec un moule de forme complexe.

Par rapport à cet état de la technique précité, la présente invention propose un dispositif de montage dans lequel ladite pièce de liaison est de conception aisée tant en assurant une bonne tenue mécanique pour l'assemblage avec l'embase.

Plus précisément, le dispositif de montage selon l'invention comprend des moyens pour guider et fixer les retours d'un pare-chocs sur des parties latérales de la carrosserie d'un véhicule, pour chaque retour lesdits moyens comprenant :
- une embase montée sur la face extérieure de ladite partie latérale de la carrosserie et comportant un passage pour la mise en place d'un organe de fixation apte à être engagé par l'intérieur de la carrosserie, dans une ouverture correspondante prévue dans ladite partie latérale,
- une pièce de liaison montée sur la face intérieure dudit retour de pare-chocs, apte à être coulissée sur l'embase.

Il est caractérisé en ce que chaque pièce de liaison comprend un logement de réception dudit organe de fixation apte à venir en prise avec ladite pièce de liaison dans ledit logement pour assurer l'assemblage de ladite pièce de liaison avec l'embase associée.

Ainsi, pour monter un pare-chocs sur la carrosserie d'un véhicule au moyen du dispositif selon l'invention, un seul ouvrier fixe tout d'abord une embase sur chaque partie latérale correspondante de la carrosserie, puis positionne le pare-chocs muni de deux pièces de liaison respectivement sur ses deux retours, sur le véhicule, de telle sorte que chaque pièce de liaison soit montée par coulissement sur chaque embase.

Le pare-chocs étant maintenu sur le véhicule par l'assemblage des pièces de liaison avec les embases, il peut alors engager par l'intérieur de la carrosserie un organe de fixation dans chaque ouverture prévue dans chaque partie latérale et dans chaque logement de réception de chaque pièce de liaison, via chaque passage de chaque embase afin de solidariser chaque embase et chaque pièce de liaison.

La pièce de liaison du dispositif de montage conforme à l'invention, présente une épaisseur de matière minimum et optimisée sans nervures de raidissement puisque l'assemblage de la pièce de liaison avec l'embase associée est assurée par l'organe de fixation qui coopère avec ladite pièce de liaison dans ledit logement.

Selon une caractéristique particulièrement avantageuse de l'invention, l'embase comprend sur sa face interne appliquée contre la carrosserie du véhicule, un doigt d'indexation destiné à être engagé dans une ouverture prévue dans ladite carrosserie lors du montage de ladite embase sur la partie latérale correspondante, afin d'ajuster le montage de celle-ci de manière que le passage prévu dans l'embase pour la mise en place dudit organe de fixation soit positionné en regard de l'ouverture correspondante de la carrosserie, et que le bord supérieur de l'embase soit positionné en sorte qu'il sert d'appui au rebord supérieur du pare-chocs lorsque la pièce de liaison est montée par coulissement sur ladite embase.

Ainsi, lorsque le pare-chocs est monté sur le véhicule au moyen du dispositif selon l'invention, les rebords supérieurs des retours s'appuient sur les bords supérieurs desdites embases respectives, ce qui permet par la suite d'éviter un décalage éventuel du pare-chocs par rapport à sa position prévue sur le véhicule.

La description qui va suivre en regard des dessins annexés, donnés à titre d' exemples non limitatifs, fera bien comprendre en quoi consiste l'invention et comment elle peut être réalisée.

Sur les dessins annexés :
- la figure 1 est une vue en perspective éclatée d'un pare-chocs en position de montage et du dispositif de montage selon l'invention ;
- la figure 2 est une vue schématique en coupe de côté d'une embase du dispositif de montage selon l'invention ;
- la figure 3 est une vue schématique de face d'une pièce de liaison du dispositif de montage selon l'invention ;
- la figure 4 est une vue en coupe selon le plan A-A de la pièce de liaison de la figure 3 ;
- la figure 5 est une vue schématique de la face externe de l'embase de la figure 2 ;
- la figure 6 est une vue schématique en coupe de côté du dispositif de montage monté.

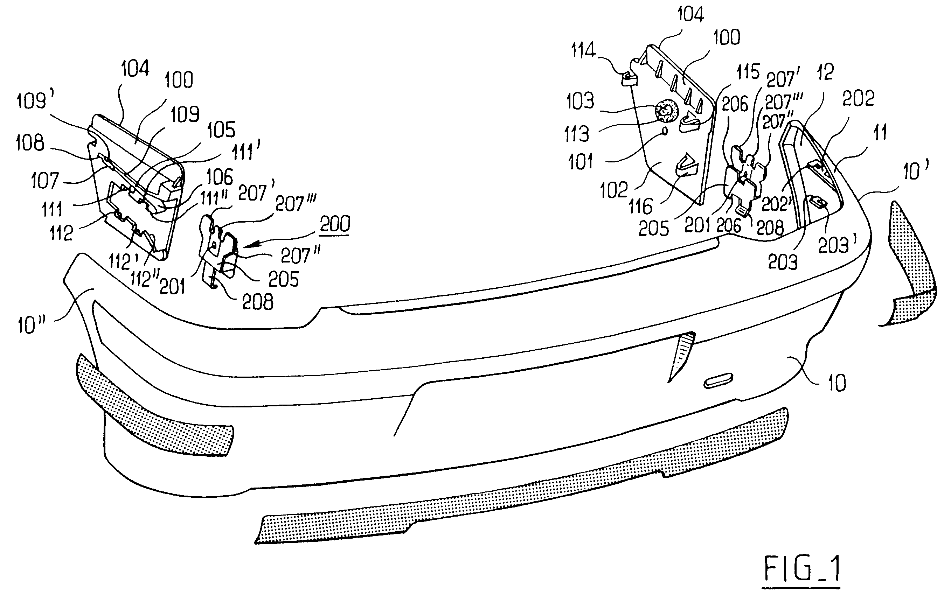

Sur la figure 1, on a représenté un pare-chocs 10, ici un pare-chocs arrière, prêt à être monté sur une carrosserie (non représentée) d'un véhicule automobile au moyen d'un dispositif de montage qui permet de guider et de fixer les retours 10', 10'' du pare-chocs 10 sur des parties latérales de ladite carrosserie.

Plus particulièrement, ce dispositif de montage comprend deux embases 100 symétriques, aptes à être montées respectivement sur les deux faces extérieures de deux parties latérales, ici les deux ailes arrières, de la carrosserie (non représentées) et deux pièces de liaison 200 identiques, destinées à être montées sur respectivement les faces intérieures 12 des retours 10', 10'' du pare-chocs 10 et aptes à être montées simultanément par coulissement respectivement sur les deux embases 100 pour le montage du pare-chocs sur ladite carrosserie.

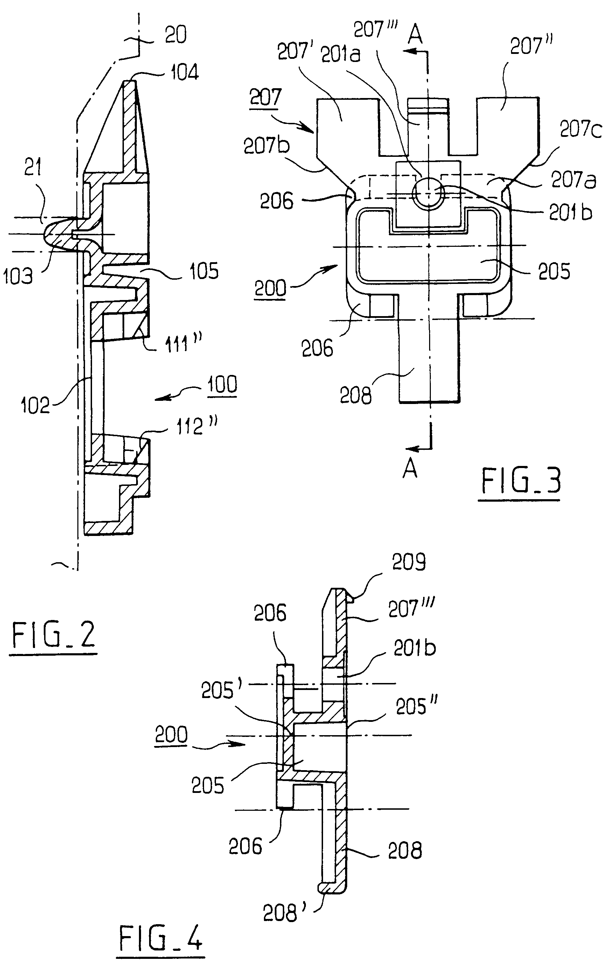

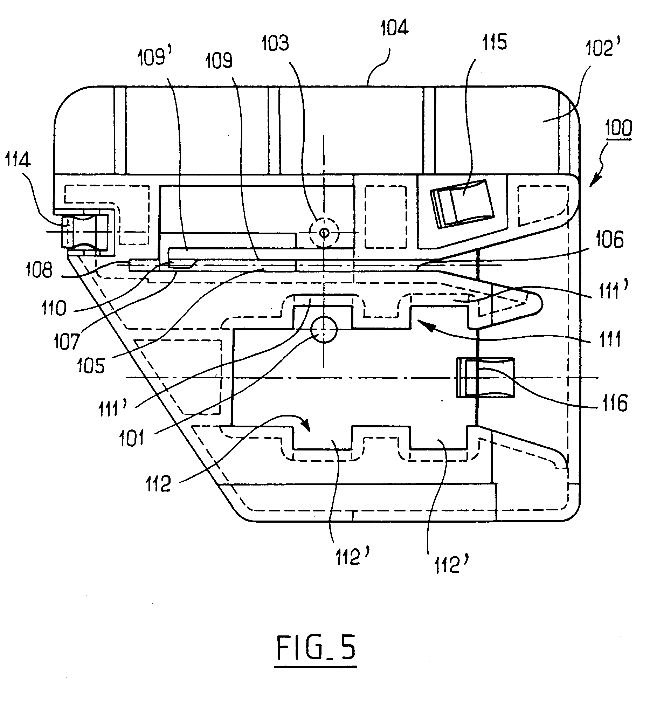

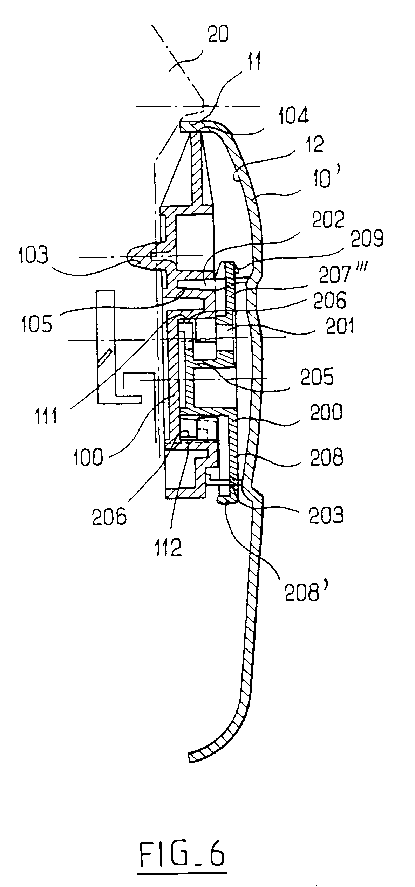

Comme on peut mieux le voir sur les figures 2 et 5, chaque embase 100 est une pièce en matière plastique moulée qui comprend un passage 101 pour la mise en place d'un organe de fixation, ici un boulon (non représenté), destiné à être engagé par l'intérieur de la carrosserie dans une ouverture prévue dans ladite partie latérale 20 correspondante. L'embase 100 porte sur sa face interne 102 destinée à être appliquée contre la carrosserie, un doigt d'indexation 103 qui s'étend sensiblement perpendiculairement à ladite face interne 102. Ce doigt d'indexation 103 est placé à la verticale et au-dessus du passage 101 (voir figure 5). Comme on peut mieux le voir sur la figure 2, lors du montage de l'embase 100 sur la partie latérale 20 correspondante de la carrosserie, le doigt d'indexation 103 s'engage dans une ouverture 21 prévue dans ladite partie latérale 20 afin d'ajuster le montage de l'embase sur cette dernière de sorte que d'une part son passage 101 soit positionné en regard de l'ouverture prévue dans la carrosserie pour la mise en place du boulon (non représenté) et d'autre part le bord supérieur 104 de l'embase 100 serve d'appui au rebord supérieur 11 du retour correspondant du pare-chocs lorsque celui-ci est monté sur ladite embase (voir figure 6).

Il convient ici de préciser que chaque embase 100 est encliquetée dans trois trous (non représentés) prévus dans la carrosserie, par l'intermédiaire de trois dents d'encliquetage 114, 115, 116 prévues sur la face interne 102 de ladite embase 100 (voir figure 5).

Selon le mode de réalisation représenté sur les figures, il est prévu un joint d'étanchéité 113 positionné autour du doigt d'indexation 103 (voir figure 1), destiné à s'appliquer entre la face interne 102 de l'embase 100 et la face externe de la carrosserie.

Dans le cas particulier où l'ouverture 21 dans laquelle s'engage le doigt d'indexation 103 de ladite embase 100 débouche dans un conduit d'aération, du coffre par exemple, ce joint d'étanchéité 113 permet d'éviter une entrée d'eau éventuelle dans ledit conduit d'aération via l'ouverture 21.

Ce joint d'étanchéité 113 permet dans tous les cas de ne pas abîmer la peinture de la carrosserie sur laquelle s'applique l'embase 100.

Par ailleurs, comme le montrent les figures 3 et 4, chaque pièce de liaison 200 du dispositif de montage réalisée également en matière plastique moulée, comporte un corps 205 creux dont la forme est sensiblement parallélépipédique et comportant sur une face 205' deux rebords 206 longitudinaux. Le corps 205 présente alors une section en T. Les deux rebords longitudinaux 206 sont adaptés pour coulisser dans deux glissières parallèles 111, 112 prévues sur l'embase 100.

En effet, comme le montre mieux la figure 5, chaque embase 100 comporte sur sa face externe 102' deux glissières parallèles 111, 112, une glissière inférieure 112 et une glissière supérieure 111, pour le montage par coulissement de chaque pièce de liaison 200. Ces deux glissières 111, 112 sont formées au moulage de l'embase 100.

A cet effet, on remarquera que chaque glissière 111, 112 comprend des parois et un fond pourvus d'évidements 111', 112' pour faciliter le démoulage de l'embase 100. Ces deux glissières 111, 112 sont espacées l'une de l'autre de la largeur du corps 205 de la pièce de liaison 200. La glissière supérieure 111 est positionnée juste au-dessus du passage 101 pour la mise en place du boulon. On remarquera plus particulièrement sur la figure 1, que les glissières 111, 112 comportent à leur embouchure des parois externes 111'', 112'' qui s'étendent obliquement dans des directions divergentes par rapport à l'axe horizontal desdites glissières, de façon à former des rampes inclinées d'accès à celles-ci.

En outre, comme le montrent les figures 3 et 4, chaque pièce de liaison 200 comporte deux pattes de montage 207, 208, une patte supérieure 207 et une patte inférieure 208, qui s'étendent à partir de la base 205'' du corps 205 opposée à la face 205' portant les rebords longitudinaux 206, latéralement dudit corps 205 de part et d'autre de ce dernier. La patte inférieure 208 comprend à son extrémité libre un rebord 208' qui s'étend perpendiculairement à ladite patte 208. La patte de montage supérieure 207 est une patte à trois branches parallèles 207', 207'', 207'''. La base 207a de cette patte supérieure 207 est solidaire du corps 205 et s'étend sur toute sa longueur. Cette base 207a présente deux bords latéraux d'extrémité 207b, 207c qui s'étendent à partir du corps 205 obliquement en éloignement l'un de l'autre, puis deviennent parallèles, formant alors les bords latéraux des deux branches parallèles latérales 207', 207''. Ces deux branches latérales 207', 207'' parallèles présentent des extrémités chanfreinées. En outre, on distingue sur les figures 3 et 4, la branche centrale 207''' qui comporte à son extrémité libre un rebord d'encliquetage 209 qui s'étend perpendiculairement à ladite patte centrale 207''', dans une direction opposée à celle du rebord 208' de la patte inférieure 208.

Chaque pièce de liaison 200 comporte un logement de réception de l'organe de fixation, ici du boulon. Ce logement de réception comprend d'une part une ouverture semi-circulaire 201a ménagée dans le rebord longitudinal 206 du corps 205, disposé parallèlement à la patte de montage supérieure 207 et d'autre part, un écrou 201b placé dans la base 207a de ladite patte supérieure 207, de telle manière que l'écrou 201b se trouve en regard de l'ouverture semi-circulaire 201a.

Il est intéressant de préciser que le côté latéral du corps 205 se trouvant entre ledit rebord longitudinal 206 et la base 207a de la patte de montage supérieure 207, est creusée de manière à faciliter la mise en place du boulon dans l'écrou 201b, via l'ouverture semi-circulaire 201a.

Comme le montre plus particulièrement la figure 6, chaque pièce de liaison 200 est montée par encliquetage avec un jeu de montage, au moyen des pattes de montage 207, 208, entre un montant supérieur 202 et un montant inférieur 203 solidaires de la face interne 12 du retour 10' correspondant du pare-chocs. Selon le mode de réalisation représenté sur la figure 6, ces deux montants 202, 203 viennent de formation avec le pare-chocs en matière plastique réalisé par moulage. Mais on peut envisager que les deux montants 202, 203 soient soudés sur la face interne 12 du retour 10'. Le montant supérieur 202 de faible épaisseur comporte trois ouvertures 202' pour la mise en place des extrémités libres des trois branches 207', 207'', 207''' de la patte supérieure 207 de la pièce de liaison 200 et le montant inférieur 203 également de faible épaisseur comporte une ouverture 203' pour l'introduction de l'extrémité libre de la patte inférieure 208 de la pièce de liaison 200. Pour monter ladite pièce de liaison 200 sur le retour, on introduit tout d'abord la patte inférieure 208 de ladite pièce de liaison 200 dans l'ouverture 203' du montant inférieur 203, puis les trois branches 207', 207'', 207''' de la patte supérieure 207 dans les ouvertures correspondantes 202' du montant supérieur 202, de telle sorte que le rebord d'encliquetage 209 de la branche centrale 207''' vient s'encliqueter sur le bord de l'ouverture correspondante dudit montant, les deux branches latérales 207', 207'' servant de guidage et de maintien de ladite branche centrale 207'''. En outre, le rebord 208' de la patte inférieure 208 bloque celle-ci dans ledit montant inférieur 203. La longueur des pattes de montage inférieure et supérieure 207, 208 est telle qu'elle permet un certain débattement vertical de la pièce de liaison 200 montée entre les deux montants.

Lorsque la pièce de liaison 200 est coulissée dans l'embase 100 correspondante pour le montage du pare-chocs sur le véhicule, le montant supérieur 202 solidaire du retour correspondant est glissé dans une glissière 105 prévue sur l'embase 100 (voir figure 6).

Comme le montre mieux la figure 5, cette glissière 105 s'étend parallèlement aux glissières 111, 112 pour le montage de la pièce de liaison 200 elle-même. La glissière 105 est située au-dessus de la glissière supérieure 111 et au-dessous de la position du doigt d'indexation 103. Cette glissière 105 vient de formation avec l'embase 100 et comporte une paroi inférieure rigide 106 dans laquelle est ménagé un renfoncement 107 situé à proximité du fond 108 de la glissière 105. En outre, cette glissière 105 comporte une paroi supérieure 109 présentant une partie flexible 109' située également à proximité du fond de ladite glissière 105. Cette partie flexible 109' porte une saillie 110 positionnée en regard du renfoncement 107 de la paroi inférieure 106. A l'embouchure de ladite glissière 105, les parois inférieure et supérieure 106, 109 s'étendent dans des directions obliques divergentes par rapport à la direction horizontale de la glissière 105, de façon à former des rampes inclinées d'accès à cette dernière.

Le montant supérieur 202 comporte une encoche (non représentée) ménagée dans son bord longitudinal avant à proximité de son bord latéral qui s'engage en premier dans ladite glissière 105. Les positions de l'encoche dans le montant supérieur 202, de la saillie 110 sur la paroi supérieure flexible 109' de la glissière 105 et du renfoncement 107 dans la paroi inférieure 106 de la glissière, sont telles que lorsque ledit montant supérieur 202 est glissé dans la glissière 105, son encoche passe au niveau de la saillie 110 un point dur de blocage provoquant la flexion de ladite partie flexible 109' de la glissière 105 et permettant le maintien de la pièce de liaison 200 sur l'embase 100.

La figure 6 représente un retour 10' de pare-chocs 10 monté sur la partie latérale 20 de la carrosserie au moyen du dispositif de montage selon l'invention.

Comme on peut le voir sur cette figure, l'embase 100 est encliquetée dans la partie latérale 20, avec son doigt d'indexation 103 engagé dans l'ouverture 21 correspondante de la carrosserie. La partie de liaison 200 encliquetée dans les montants supérieur et inférieur 202, 203 est coulissée dans les glissières 111, 112 de l'embase 100 et le montant supérieur 202 du retour 10' est engagé et bloqué dans la glissière 105 de l'embase, de telle sorte que d'une part l'écrou 201b, l'ouverture semi-circulaire 201a de la pièce de liaison 200, et le passage 101 de l'embase 100 ainsi que l'ouverture correspondante de ladite partie latérale soient alignés et d'autre part le rebord supérieur 11 du retour 10' s'appuie sur le bord supérieur 104 de l'embase 100.

Il convient de préciser qu'avant boulonnage, l'ensemble embase et pièce de liaison monté sur le pare-chocs est maintenu en position par l'intermédiaire du montant supérieur 202 bloqué dans ladite glissière 105 de l'embase 100. Ainsi, une fois que les retours du pare-chocs sont coulissés sur les deux embases, l'ouvrier peut les boulonner en engageant un boulon dans chaque ensemble embase/pièce de liaison par l'intérieur de la carrosserie et en vissant le boulon dans l'écrou.

Le jeu de montage de chaque pièce de liaison entre chaque montant du retour permet de donner une certaine souplesse de montage. Toutefois, une fois que le pare-chocs est boulonné sur la carrosserie, il ne peut plus se décaler par rapport à sa position prévue sur ladite carrosserie, du fait que les rebords supérieurs des deux retours s'appuient contre les bords supérieurs des embases 100 de montage.

Enfin, une caractéristique avantageuse du dispositif de montage représenté sur les figures est qu'il peut s'adapter à tout type de pare-chocs et de véhicule, il suffit pour cela de changer la position des montants sur les retours.

## Revendications

1. Dispositif de montage d'un pare-chocs (10) sur une carrosserie de véhicule automobile, comprenant des moyens pour guider et fixer les retours du pare-chocs sur des parties latérales de ladite carrosserie, pour chaque retour (10', 10'') lesdits moyens comprenant :
- une embase (100) montée sur la face extérieure de ladite partie latérale de la carrosserie et comportant un passage (101) pour la mise en place d'un organe de fixation apte à être engagé par l'intérieur de la carrosserie, dans une ouverture correspondante prévue dans ladite partie latérale,
- une pièce de liaison (200) montée sur la face intérieure (12) dudit retour (10') de pare-chocs (10), apte à être coulissée sur l'embase (100),
caractérisé en ce que chaque pièce de liaison comprend un logement de réception (201a, 201b) de chaque organe de fixation apte à venir en prise avec ladite pièce de liaison (200) dans ledit logement (201a, 201b) pour assurer l'assemblage de ladite pièce de liaison (200) avec l'embase (100) associée.

2. Dispositif selon la revendication 1, caractérisé en ce que l'embase (100) comprend sur sa face interne (102) appliquée contre la carrosserie du véhicule, un doigt d'indexation (103) destiné à être engagé dans une ouverture (21) prévue dans la partie latérale (20) correspondante de ladite carrosserie lors du montage de ladite embase (100) sur la partie latérale (20) correspondante, afin d'ajuster le montage de celle-ci de manière que le passage (101) prévu dans l'embase (100) pour la mise en place dudit organe de fixation soit positionné en regard de l'ouverture correspondante de la carrosserie, et que le bord supérieur (104) de l'embase (100) soit positionné en sorte qu'il sert d'appui au rebord supérieur (11) du retour (10') de pare-chocs (10) lorsque la pièce de liaison (200) est montée par coulissement sur ladite embase (100).

3. Dispositif selon l'une des revendications 1 ou 2, caractérisé en ce que la pièce de liaison (200) est montée par encliquetage avec un jeu de montage, entre un montant supérieur (202) et un montant inférieur (203) solidaires de la face interne (12) du retour de pare-chocs (10), le montant supérieur (202) étant destiné à être glissé dans une glissière (105) prévue dans l'embase (100) lors du montage par coulissement de la pièce de liaison (200) sur ladite embase (100).

4. Dispositif selon la revendication 3, caractérisé en ce que ledit montant supérieur (202) solidaire dudit retour, présente une encoche située à proximité de son bord latéral d'engagement dans la glissière (105) et en ce que ladite glissière (105) comporte d'une part une paroi inférieure rigide (106) dans laquelle est ménagé un renfoncement (107) situé à proximité du fond (108) de la glissière (105) et d'autre part une paroi supérieure (109) présentant une partie flexible (109') située également à proximité du fond (108) de ladite glissière, cette partie flexible portant une saillie (110) placée en regard dudit renfoncement (107), ladite encoche (202'), ladite saillie (110) et ledit renfoncement (109) étant arrangés en sorte que lorsque le montant supérieur (202) est glissé dans la glissière (105), son encoche (203) passe au niveau de la saillie (110) un point dur de blocage provoquant la flexion de ladite partie flexible (109') de la paroi supérieure (109) de la glissière (105).

5. Dispositif selon l'une des revendications 3 ou 4, caractérisé en ce que la glissière (105) prévue dans l'embase (100) comporte des parois supérieure et inférieure (106, 109) formant à l'embouchure de la glissière (105) des rampes inclinées d'accès à ladite glissière (105).

6. Dispositif selon l'une quelconque des revendications 1 à 5, caractérisé en ce que la pièce de liaison (200) comporte un corps (205) avec une section en T comportant des bords longitudinaux (206) adaptés pour coulisser dans deux glissières parallèles (111, 112) prévues sur l'embase (100) et comprend des pattes de montage (207, 208), une patte supérieure (207) et une patte inférieure (208), qui s'étendent latéralement à partir dudit corps (205) de part et d'autre de celui-ci et qui sont destinées à être montées sur la face intérieure (12) du retour (10') de pare-chocs (10), le logement de réception (101) dudit organe de fixation (300) étant formé dans ledit corps (205) et dans la patte supérieure (207) de montage de telle sorte qu'il vient se positionner en regard du passage (101) prévu dans l'embase (100) lorsque ladite pièce de liaison est coulissée dans lesdites glissières (111, 112).

7. Dispositif selon la revendication 6, caractérisé en ce que les deux glissières parallèles (111, 112) de l'embase (100) pour le montage par coulissement du corps (205) de la pièce de liaison (200), comportent des parois externes (111'', 112'') formant à l'embouchure desdites glissières (111, 112) des rampes inclinées d'accès à celles-ci.

8. Dispositif selon l'une quelconque des revendications 2 à 7, caractérisé en ce qu'il est prévu un joint d'étanchéité (113) positionné autour du doigt d'indexation (103) de l'embase (100).

9. Dispositif selon l'une quelconque des revendications 1 à 8, caractérisé en ce que l'organe de fixation est un boulon qui coopère avec un écrou porté par la pièce de liaison.

10. Dispositif selon l'une quelconque des revendications 1 à 9, caractérisé en ce que l'embase (100) et la pièce de liaison (200) sont des pièces moulées en matière plastique.

11. Dispositif selon l'une quelconque des revendications 1 à 10, caractérisé en ce que l'embase (100) est encliquetée dans des trous d'encliquetage prévus dans la carrosserie par l'intermédiaire de dents d'encliquetage (114, 115, 116) prévues sur sa face interne (102).

## Claims

1. A device for mounting a bumper (10) on a motor vehicle body, the device comprising means for guiding and fixing a folded-back portion of a bumper on lateral portion of said body, said means comprising, for each folded-back portion (10', 10''):
• a base (100) mounted on the outside face of said lateral portion of the body and including a passage (101) for receiving a fixing member suitable for being engaged from inside the bodywork in a corresponding opening provided in said lateral portion; and
• a link piece (200) mounted on the inside face (12) of said folded-back portion (10') of the bumper (10) and suitable for being slid over the base (100),
the device being characterized in that each link piece includes a reception housing (201a, 201b) for receiving each fixing member and suitable for engaging with said link piece (200) in said housing (201a, 201b) to ensure that said link piece (200) is assembled together with the associated base (100).

2. A device according to claim 1, characterized in that the base (100) comprises, on its inside face (102) pressed against the body of the vehicle, an indexing finger (103) for being engaged in an opening (21) provided in the corresponding lateral portion (20) of said body when said base (100) is mounted on the corresponding lateral portion (20) in order to adjust the mounting thereof in such a manner that the passage (101) provided in the base (100) for putting said fixing member into place is positioned facing the corresponding opening of the body, and so that the top edge (104) of the base (100) is positioned in such a manner as to serve as a support for the top rim (11) of the folded-back portion (10') of the bumper (10) when the link piece (200) is slidably mounted on said base (100).

3. A device according to claim 1 or 2, characterized in that the link piece (200) is mounted by snap-fastening with mounting clearance, between an upper post (202) and a lower post (203) secured to the inside face (12) of the folded-back portion of the bumper (10), the upper post (202) being designed to be slid in a slideway (105) provided in the base (100) while the link piece (200) is being slidably mounted on said base (100).

4. A device according to claim 3, characterized in that said upper post (202) secured to said folded-back portion has a notch situated close to its lateral edge for engagement in the slideway (105), and in that slideway (105) includes both a rigid bottom wall (106) in which a setback (107) is formed situated close to the far end (108) of the slideway (105), and a top wall (109) having a flexible portion (109') likewise situated close to the far end (108) of said slideway, said flexible portion carrying a projection (110) placed facing said setback (107), said notch (202'), said projection (110) and said setback (109) being disposed in such a manner that when the upper post (202) is slid in the slideway (105), its notch (203) passes through a locking stiff point level with the projection (110) causing said flexible portion (109') of the top wall (109) of the slideway (105) to bend.

5. A device according to claim 3 or 4, characterized in that the slideway (105) provided in the base (100) includes top and bottom walls (106, 109) forming inclined access ramps to said slideway (105) at the opening of the slideway (105).

6. A device according to any one of claims 1 to 5, characterized in that the link piece (200) includes a T-section body (205) having longitudinal edges (206) adapted to slide in two parallel slideways (111, 112) provided on the base (100) and including mounting tabs (207, 208), an upper tab (207) and a lower tab (208), which tabs extend laterally from said body (205) on either side thereof and are designed to be mounted on the inside face (12) of the folded-back portion (10') of the bumper (10), the reception housing (101) of said fixing member (300) being formed in said body (205) and in the upper mounting tab (207) in such a manner as to take up a position facing the passage (101) provided in the base (100) when said link piece is slid in said slideways (111, 112).

7. A device according to claim 6, characterized in that both parallel slideways (111, 112) of the base (100) for slidably mounting the body (205) of the link piece (200) have outside walls (111'', 112'') forming sloping ramps at the inlets of said slideways (111, 112) giving access thereto.

8. A device according to any one of claims 2 to 7, characterized in that a sealing gasket (113) is provided positioned around the indexing finger (103) of the base (100).

9. A device according to any one of claims 1 to 8, characterized in that the fixing member is a bolt which co-operates with a nut carried by the link piece.

10. A device according to any one of claims 1 to 9, characterized in that the base (100) and the link piece (200) are pieces molded out of plastics material.

11. A device according to any one of claims 1 to 10, characterized in that the base (100) is snap-fastened in snap-fastening holes provided in the body via snap-fastening piece (114, 115, 116) provided on its inside face (102).

## Patentansprüche

1. Vorrichtung zur Montage einer Stoßstange (10) an einer Kraftfahrzeugkarosserie, die Einrichtungen zum Führen und Befestigen der Rückläufe der Stoßstange an den Seitenteilen der Karosserie für jeden Rücklauf (10', 10'') umfaßt, wobei die Einrichtungen folgendes umfassen:
- eine Befestigungsfläche (100), die an der Außenfläche des Seitenteils der Karosserie angebracht ist und einen Durchlaß (101) zum Anbringen eines Befestigungselementes, das sich durch das Innere der Karosserie hindurchstecken läßt, in einer in dem Seitenteil vorgesehenen Öffnung umfaßt,
- ein auf der Innenfläche (12) des Rücklaufs (10') der Stoßstange (10) befestigtes Verbindungsteil (200), das sich auf die Befestigungsfläche (100) schieben läßt,
dadurch gekennzeichnet, daß jedes Verbindungsteil ein Aufnahmelager (201a, 201b) für jedes Befestigungselement umfaßt, das dazu geeignet ist, mit dem Verbindungsteil (200) in dem Lager (201a, 201b) einzugreifen, um das Zusammenfügen des Verbindungsteils (200) mit der dazu passenden Befestigungsfläche (100) zu gewährleisten.

2. Vorrichtung nach Anspruch 1, dadurch gekennzeichnet, daß die Befestigungsfläche (100) auf ihrer Innenfläche (102), die an der Fahrzeugkarosserie anliegt, einen Steuerungsstift (103) umfaßt, der während des Anbringens der Befestigungsfläche (100) an dem entsprechenden Seitenteil (20) zum Eingreifen in eine Öffnung (21) bestimmt ist, die in dem entsprechenden Seitenteil (20) der Karosserie vorgesehen ist, um die Anbringung der Befestigungsfläche so einzustellen, daß der in der Befestigungsfläche (100) zum Festhalten des Befestigungsteils vorgesehen Durchlaß (101) gegenüber der entsprechenden Öffnung der Karosserie liegt und daß der obere Rand (104) der Befestigungsfläche (100) so angeordnet ist, daß er als Stütze der Oberkante (11) des Rücklaufs (10') der Stoßstange (10) dient, wenn das Verbindungsteil (200) durch Aufschieben auf die Befestigungsfläche (100) montiert wird.

3. Vorrichtung nach einem der Ansprüche 1 oder 2, dadurch gekennzeichnet, daß das Verbindungsteil (200) durch Einrasten in ein Montagespiel zwischen einer oberen Stütze (202) und einer unteren Stütze (203), die mit der Innenfläche (12) des Rücklaufes der Stoßstange (10) aus einem Stück bestehen, angebracht ist, wobei die obere Stütze (202) während der Gleitmontage des Verbindungselementes (200) auf der Befestigungsfläche (100) zum Gleiten in einer auf der Befestigungsfläche (100) vorgesehenen Gleitschiene (105) bestimmt ist.

4. Vorrichtung nach Anspruch 3, dadurch gekennzeichnet, daß die obere Stütze (202), die mit dem Rücklauf aus einem Stück besteht, eine Kerbe aufweist, die in der Nähe seiner Seitenkante zum Eingreifen in die Gleitschiene (105) angeordnet ist, und dadurch, daß die Gleitschiene (105) einerseits eine starre untere Wand (106), in der eine Verstärkung (107) vorgesenen ist, die in der Nähe einer Grundplatte (108) der Gleitschiene (105) angebracht ist, und andererseits eine obere Wand (109), die einen biegsamen Teil (109') aufweist, der auch in der Nähe der Grundplatte (108) der Gleitschiene angeordnet ist, umfaßt, wobei dieser biegsame Teil eine Nocke (110) aufweist, die gegenüber der Verstärkung (107) liegt, wobei die Kerbe (202'), die Nocke (110) und die Verstärkung (109) so angeordnet sind, daß, wenn die obere Stütze (202) in der Gleitschiene (105) gleitet, ihre Kerbe (203) auf dem Niveau der Nocke (110) einen harten Feststellpunkt passiert, der die Biegung des biegsamen Teils (109') der oberen Seitenwand (109) der Gleitschiene (105) hervorruft.

5. Vorrichtung nach einem der Ansprüche 3 oder 4, dadurch gekennzeichnet, daß die Gleitschiene (105), die in der Befestigungsfläche (100) vorgesehen ist, die oberen und unteren Seitenwände (106, 109) umfaßt, die an der Öffnung der Gleitschiene (105) geneigte Zugangsrampen zu der Gleitschiene (105) ausbilden.

6. Vorrichtung nach einem der Ansprüche 1 bis 5, dadurch gekennzeichnet, daß das Verbindungsteil (200) aus einem Körper (205) mit einem T-förmigen Abschnitt mit den Längskanten (206) besteht, die zum Gleiten in zwei pa rallelen, auf der Befestigungsfläche (100) vorgesehenen Gleitschienen (111, 112) geeignet sind, und die Montage klemmen (207, 208) umfaßt, eine obere Montageklemme (207) und eine untere Montageklemme (208), die sich seitlich von dem Körper (205) von einer Seite zur anderen davon ausdehnen und zur Befestigung auf der Innenfläche (12) des Rücklaufs (10') der Stoßstange (10) bestimmt sind, wobei das Aufnahmelager (201) des Befestigungselementes (300) in dem Körper (205) und in der oberen Montageklemme (207) so ausgebildet ist, daß es dem in der Befestigungsfläche (100) vorgesehenen Durchlaß (101) gegenüberliegend angeordnet ist, wenn das Verbindungsteil in den Gleitschienen (111, 112) gleitet.

7. Vorrichtung nach Anspruch 6, dadurch gekennzeichnet, daß die beiden parallelen Gleitschienen (111, 112) der Befestigungsfläche (100) zur Montage durch Gleiten des Körpers (205) des Verbindungsteiles (200) die Außenwände (111'', 112'') umfassen, die an der Öffnung der Gleitschienen (111, 112) geneigte Zugangsrampen dazu bilden.

8. Vorrichtung nach einem der Ansprüche 2 bis 7, dadurch gekennzeichnet, daß ein Dichtungsgummi (113) vorgesehen ist, der um den Steuerstift (103) der Befestigungsfläche (100) angeordnet ist.

9. Vorrichtung nach einem der Ansprüche 1 bis 8, dadurch gekennzeichnet, daß das Befestigungselement ein Bolzen ist, der in eine Mutter eingreift, die sich auf dem Verbindungsteil befindet.

10. Vorrichtung nach einem der Ansprüche 1 bis 9, dadurch gekennzeichnet, daß die Befestigungsfläche (100) und das Verbindungsteil (200) Kunststoff-Formteile sind.

11. Vorrichtung nach einem der Ansprüche 1 bis 10, dadurch gekennzeichnet, daß die Befestigungsfläche (100) in die in der Karosserie vorgesehenen Einrastlöcher durch die Einrastzähne (114, 115, 116) einrastet, die auf ihrer Innenfläche (102) vorgesehen sind.
